# FASCICULE DE BREVET EUROPEEN

(11) **EP 3 854 208 B1**
(45) Date de publication et mention de la délivrance du brevet: **12.10.2022**
(21) Numéro de dépôt: 20216698.9
(22) Date de dépôt: 22.12.2020
(51) Int. Cl.: A01K 61/54, A01K 61/55

(54) **SUPPORT D'AU MOINS UNE POCHE OSTRÉICOLE AMÉLIORÉ**
VERBESSERTE HALTERUNG FÜR MINDESTENS EIN AUSTERNNETZ
SUPPORT FOR AT LEAST ONE IMPROVED OYSTER-FARMING BAG

(30) Priorité: 21.01.2020 FR 2000582
(43) Date de publication de la demande: 28.07.2021
(73) Titulaire: Speciales Gillardeau, 17560 Bourcefranc-Le-Chapus (FR); Bureau Jean Michel, 17560 Bourcefranc-le-Chapus (FR)
(72) Inventeur: GILLARDEAU, Thierry, 17390 La Tremblade (FR); FOURNIER, Yannick, Dungarvan (IE); BUREAU, Jean-Michel, 17560 Bourcefranc-le-Chapus (FR)
(74) Mandataire: Casalonga

(56) Documents cités:
- FR-A1- 2 581 835
- FR-A1- 2 900 027
- FR-A1- 2 908 013

## Description

La présente invention concerne un support de poches ostréicoles, et plus particulièrement un dispositif de maintien de poches à huîtres sur un plateau d'un support de réception.

L'élevage d'huîtres dans des parcs est généralement réalisé à partir de jeunes huîtres qui sont placées dans des poches ostréicoles, ou poches à huîtres, en matériau grillagé. Les poches à huîtres une fois remplies sont placées sur des plateaux de tables de support immergées ou en zone de marnage, souvent sur l'estran. Les huîtres sont ainsi maintenues le temps de leur croissance dans le milieu marin.

Les tables de support généralement utilisées comprennent un assemblage de barres longitudinales parallèles formant un plateau de réception des poches à huîtres avec des barres transversales pliées selon une forme relative en U inversé pour former un piètement de la table. La table comprend généralement trois à quatre barres longitudinales et deux à trois barres transversales.

Lors de l'élevage des huîtres, une partie du travail de l'ostréiculteur consiste à retourner régulièrement les poches afin que toutes les huîtres puissent croître dans de bonnes conditions et avec une forme régulière.

Il existe actuellement différents systèmes de fixation des poches à huîtres sur les tables. L'objectif principal de ces systèmes de fixation est de maintenir verticalement et horizontalement les poches contenant les huîtres sur les tables posées à même le sol.

Le système le plus répandu à ce jour consiste à utiliser des crochets métalliques rattachés à des élastiques disposés aux quatre coins de la poche pour solidariser la poche avec les barres longitudinales de la table.

Bien que ce système présente une certaine simplicité d'utilisation, il a pour inconvénients d'avoir des temps de mise en place et de retrait assez longs et d'offrir une faible résistance à l'usure dans le temps ce qui entraîne la rupture des élastiques engendrant ainsi des pertes de poches et donc d'huîtres.

Un autre système connu consiste à utiliser des picots fixés sur la table et faisant saillies vers le haut. Les poches sont empalées sur ces picots au travers des mailles de leur structure grillagée plastique. De grands élastiques en caoutchouc sont ensuite fixés sur les picots en saillie pour maintenir verticalement les poches sur la table.

Un tel système de maintien de la poche présente l'intérêt de gagner du temps pour la mise en place et le retrait des poches par rapport au précédent système. Mais il n'élimine pas l'inconvénient majeur de risque de pertes de plusieurs poches à la fois à cause d'une éventuelle rupture d'élastiques. En effet, un tel système ne permet qu'un maintien peu résistant des poches, ce qui interdit son utilisation aux zones très agitées.

Un autre système est connu du document FR 2 863 824. Ce document décrit un dispositif de maintien de poches à huîtres comprenant un ou deux châssis rigides couplés à la table de support à l'aide de moyens de pivotement. Les châssis pivotent par rapport à la table entre une position ouverte et une position fermée. Les châssis comprennent en outre des moyens de maintien des châssis en position fermée. Les moyens de maintien en position sont décrits comme des pointes rectilignes destinées à pénétrer dans les mailles des poches dans la position de maintien de ces poches.

Un tel dispositif de maintien des poches sur la table permet de réduire le temps de mise en place et de retrait des poches à huîtres.

Cependant, son utilisation ne réduit pas les risques de dégradation, et notamment de déchirure, des poches à huîtres et par conséquent le risque de perdre les huîtres contenues dans une poche. En effet, les nombreuses pointes rectilignes en saillie pénétrant dans les mailles au centre des poches à chaque manipulation des châssis peuvent entraîner une usure accrue des mailles des poches, notamment lorsque les eaux sont immergées dans des eaux même faiblement agitées, et la détérioration des huîtres en elles-mêmes.

L'invention vise à pallier ces inconvénients en fournissant un support de poches à huîtres assurant un verrouillage du maintien des poches à huîtres sur le plateau du support, facile, rapide à utiliser et assurant l'intégrité des poches ostréicoles et des huîtres.

Selon un aspect de l'invention, il est proposé pour cela un support d'une ou plusieurs poches ostréicoles pour l'élevage d'huîtres, comprenant un plateau et des moyens de maintien desdites poches ostréicoles sur le plateau, les moyens de maintien comprenant au moins un battant fixé de manière pivotante par rapport au plateau entre une position ouverte permettant la mise en place des poches ostréicoles sur le plateau et une position fermée dans laquelle le battant est en regard du plateau de manière à maintenir les poches ostréicoles en position entre le plateau et le battant.

En outre, l'extrémité libre du battant comporte une barre longitudinale dimensionnée de façon à s'étendre sur les poches ostréicoles dans la position fermée, le support comprenant des éléments de retenue du battant aptes à appliquer une force de retenue sur la barre longitudinale pour fixer le battant dans la position fermée.

Selon une caractéristique, la barre longitudinale peut être apte à être déformée pour son montage en force dans la position fermée dans laquelle la barre longitudinale est retenue par contrainte par les éléments de retenue.

Avantageusement, les éléments de retenue peuvent être disposés sur au moins une extrémité libre du plateau.

Selon un mode de réalisation, un ou plusieurs des éléments de retenue peuvent être des picots s'étendant depuis le plateau dans un plan perpendiculaire au plan passant par le plateau.

De préférence, les battants et les éléments de retenue sont configurés de sorte que dans la position fermée du battant, la barre longitudinale est retenue par contrainte par deux picots.

Selon un mode de réalisation, le support peut comprendre deux battants.

De plus, les deux battants peuvent être disposés sur le plateau de manière à pivoter en sens opposés.

De préférence, le support comprend des moyens amovibles de fixation du battant au plateau.

Selon un mode de réalisation, les moyens amovibles de fixation peuvent comprendre au moins deux crochets de pivotement en forme de J ou de U solidaires du battant à une extrémité des crochets.

D'autres buts, avantages et caractéristiques ressortiront de la description qui va suivre, donnée à titre purement illustratif et faite en référence aux dessins annexés sur lesquels :
[Fig 1] présente, de manière schématique, une vue en perspective d'un support de poches à huîtres dans une position fermée, conforme à l'invention.
[Fig 2] illustre schématiquement une vue en perspective des battants du support de la figure 1.
[Fig 3] représente schématiquement le support de la figure 1 en position ouverte.

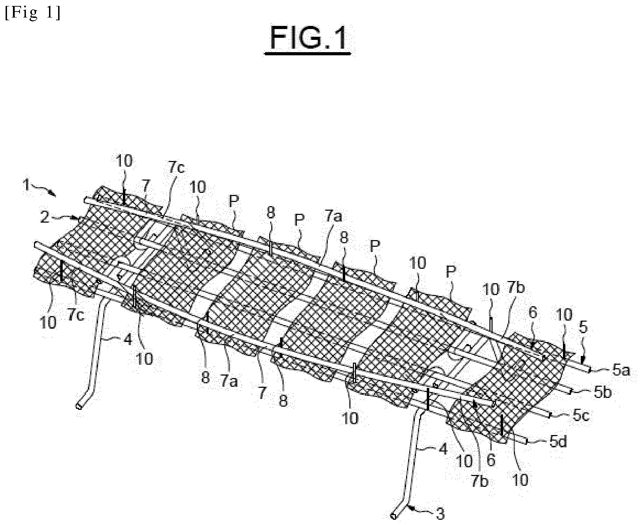

Sur la figure 1 est représentée schématiquement une vue en perspective d'un support 1 d'une ou plusieurs poches ostréicoles P pour l'élevage d'huîtres. Le support 1 peut comprendre une table 2. Dans l'exemple représenté, la table 2 est fixée sur un piètement 3. Le piètement 3 comprend deux barres métalliques 4 cintrées formant sensiblement un U inversé dont les extrémités libres forment des pieds.

Le support comprend un plateau 5 de réception apte à recevoir une ou plusieurs poches à huîtres P. Dans l'exemple illustré, le plateau 5 est formé par la table 2. Le plateau peut comprendre quatre barres longitudinales parallèles, dont deux barres périphériques 5a et 5d et deux barres centrales 5b et 5c. Les barres longitudinales 5a, 5b, 5c et 5d de la table 2 sont soudées sur les barres métalliques 4.

Le support 1 comprend en outre des moyens de maintien des poches ostréicoles P sur le plateau 5.

Les moyens de maintien comportent au moins un battant 6, fixé de manière pivotante par rapport au plateau 5, qui peut être déplacé d'une position ouverte permettant la mise en place des poches ostréicoles P sur le plateau 5 vers une position fermée dans laquelle le battant 6 est en regard de la table 2 de manière à maintenir les poches ostréicoles P en position entre le plateau 5 et le battant 6.

Par position ouverte, on entend une position dans laquelle les battants 6 sont dégagés des poches ostréicoles P.

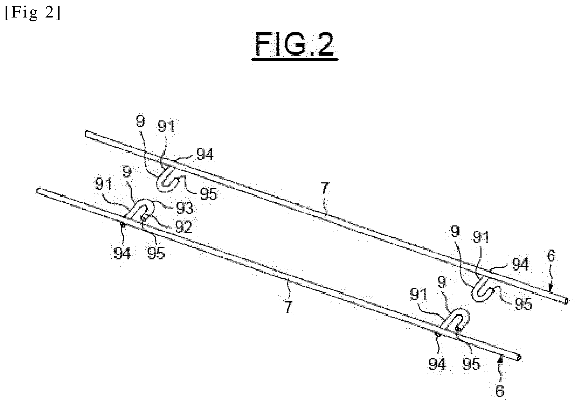

Pour un meilleur maintien des poches ostréicoles P, le support 1 comprend, de préférence, deux battants 6. Sur la figure 2 sont illustrés schématiquement en perspective les deux battants 6 du support 1 de la figure 1.

L'extrémité libre du battant 6 comporte une barre longitudinale 7 dimensionnée de sorte qu'elle s'étend sur les poches ostréicoles P lorsque le battant 6 est dans la position fermée.

La barre longitudinale 7 du battant 6 s'étend selon l'axe longitudinal de la table 2 lorsque la barre longitudinale 7 est fixée au plateau 5.

Les barres longitudinales 5a, 5b, 5c et 5d du plateau 5 et la barre longitudinale 7 des battants 6 sont de préférence des barres métalliques, par exemple de l'acier.

En outre, les moyens de maintien comprennent également des éléments de retenue 8 aptes à appliquer une force de retenue sur la barre longitudinale 7 du battant 6 pour fixer le battant 6 dans la position fermée. Dans la position fermée, la barre longitudinale 7 est retenue par contrainte par les éléments de retenue 8 sur lesquels elle est montée.

De préférence, la barre longitudinale 7 du battant 6 est apte à être déformée pour son montage en force en position fermée. De préférence, les propriétés élastiques de la barre longitudinale 7 du battant 6 lui confère un état initial de repos, en position ouverte, et un état déformé, en position fermée. Après avoir été basculé en position fermée, lorsque le battant 6 est ensuite rebasculé en position ouverte, la barre longitudinale 7 du battant 6 retourne à son état initial.

Dans la position ouverte, c'est-à-dire à l'état initial de repos, la barre longitudinale 7 du battant 6 est sensiblement droite. Pour son passage en position fermée, la barre longitudinale 7 du battant 6 est ensuite déformée par une force manuelle exercée lorsque l'on tire dessus pour la coincer derrière les éléments de retenue. Ses extrémités libres se rétractent, elle se courbe et forme sensiblement un arc de cercle. Une fois montée sur les éléments de retenue 8, la barre longitudinale 7 du battant 6 est maintenue ainsi déformée sous la contrainte des éléments de retenue 8, en position fermée.

Dans l'exemple illustré, les barres longitudinales 7 du battant 6 sont en acier. L'élasticité de ce matériau à des dimensions adéquates confère les propriétés de déformation nécessaires à la barre longitudinale 7. Cette force de retenue exercée sur la barre longitudinale 7 du battant 6 par les éléments de retenue permet un maintien fiable et robuste de la barre longitudinale 7 du battant 6, même en cas de mauvais temps.

Les barres longitudinales 7 du battant 6 empêchent ainsi le déplacement des poches ostréicoles P selon un plan vertical, perpendiculaire au plan de la table 2.

En outre, dans l'exemple illustré sur les figures, les battants 6 sont fixés de manière pivotante sur les barres longitudinales centrales 5b et 5c du plateau 5 de telle façon que les battants 6 pivotent en sens opposés. Lors du passage de la position fermée vers la position ouverte, les deux battants 6 pivotent alors l'un vers l'autre, vers le centre du plateau 5.

Dans cette configuration, les éléments de retenue 8 sont alors avantageusement disposés sur les extrémités libres du plateau 5 et, par exemple, sur les barres longitudinales périphériques 5a et 5d.

Dans un mode de réalisation alternatif, on pourra envisager de fixer les battants 6 aux barres longitudinales périphériques 5a et 5d, toujours de sorte que lors du passage de la position fermée vers la position ouverte, les deux battants 6 pivotent cette fois-ci à l'opposé l'un de l'autre, vers l'extérieur du plateau 5. Dans cette autre configuration, les éléments de retenue 8 seront avantageusement fixés sur les barres longitudinales centrales 5b et 5c.

En outre, les éléments de retenue 8 peuvent être au moins en partie des picots s'étendant depuis le plateau dans un plan perpendiculaire au plan passant par le plateau 5.

Par picot on entend, une tige faisant saillie vers le haut.

Les picots illustrés sont soudés aux barres longitudinales périphériques 5a et 5d de la table 2.

De préférence et comme cela est illustré, les battants 6 et les moyens de retenue 8 sont configurés de sorte que dans la position fermée du battant 6, chaque barre longitudinale 7 est retenue par contrainte par deux picots 8. L'emplacement des picots et les dimensions de la barre longitudinale 7 du battant 6 pourront être adaptés à cette fin.

Par ailleurs, chaque battant 6 comprend des moyens de fixation du battant 6 au plateau 5 fixant de manière pivotante le battant 6 par rapport au plateau 5. Ces moyens de fixation sont de préférence amovibles de sorte que la disposition et le retrait des poches ostréicoles P soient facilités. De plus, les moyens de fixation amovibles permettent un nettoyage simple et rapide des éléments du battant 6.

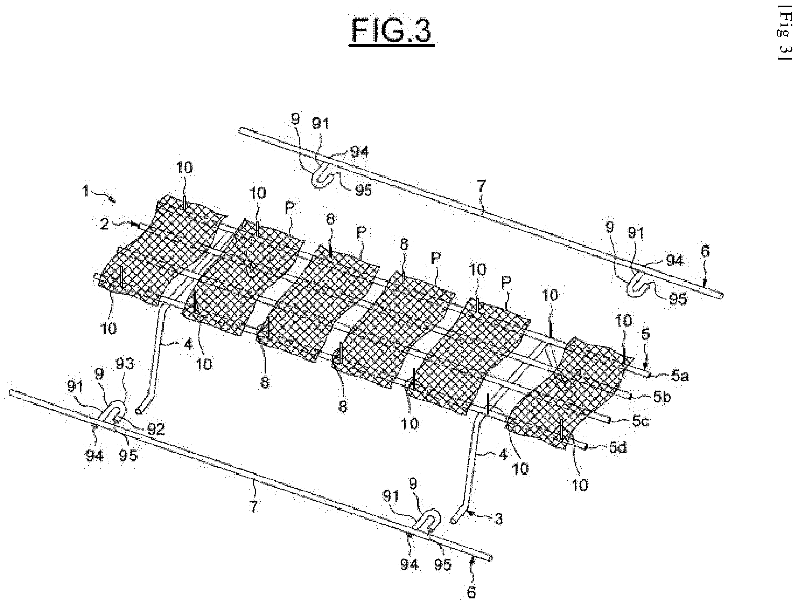

Comme cela est représenté à la figure 3 illustrant le support en position ouverte, les battants 6 maintenus de façon amovible sont retirés du plateau 5, ce qui facilite la mise en place des poches ostréicoles P. Lorsque le support 1 doit être repositionné en position fermée, les battants 6 sont replacés sur le plateau 5.

Dans l'exemple illustré, les moyens amovibles de fixation comportent deux crochets 9, avantageusement métalliques, et de préférence conformés en J. Chaque crochet 9 en J comprend une première portion rectiligne 91 et une seconde portion rectiligne 92 plus courte que la première portion rectiligne 91. La première portion rectiligne 91 et la seconde portion rectiligne 92 sont raccordées par une portion semi-annulaire 93. Chaque crochet 9 en J comprend ainsi une première extrémité 94 à l'extrémité libre de la première portion rectiligne 91 et une seconde extrémité 95 à l'extrémité libre de la seconde portion rectiligne 92.

La première extrémité 94 de chaque crochet 9 en J est solidaire, par exemple soudée, de la barre longitudinale 7 correspondante tandis que la seconde extrémité 95 de chaque crochet 9 en J reste libre.

Chaque battant 6 est accroché à l'aide des crochets 9 en J à une barre longitudinale 5a, 5b, 5c, 5d distincte disposée à la périphérie du plateau 5.

Les crochets sont, de préférence, métalliques.

Selon un autre mode de réalisation, on pourra prévoir que les crochets soient en forme de U.

L'utilisation de crochets en J ou U facilite la mise en place et le retrait de la barre sur la table 2. De plus, le fait que les crochets en J soient solidaires du battant 6 permet de fournir un battant 6 rigide en une seule pièce comportant à la fois des moyens de pivotement et des moyens de fixation amovibles solides et possédant un faible taux d'usure.

Comme on peut le voir sur les figures 1 et 3, le support 1 comprend un nombre de picots supérieur à deux. Le support 1 illustré comprend deux picots 8 par battant 6 jouant le rôle de moyen de retenue du battant 6. Il est toutefois avantageux que des picots supplémentaires 10, ou tout moyen équivalent, soient disposés sur le plateau 5, par exemple le long des barres longitudinales périphériques 5a et 5d, de sorte qu'une fois les poches ostréicoles P disposées sur le plateau 5, les picots 8 et les picots supplémentaires 10 traversent les poches ostréicoles P de façon à les maintenir lorsque les battants 6 ne sont pas en position fermée. Ceci permet notamment d'assurer que les poches ostréicoles P ne s'échappent pas du plateau 5 pendant la manipulation des battants 6 lors du passage en position fermée ou en position ouverte.

Les picots 8 et les picots supplémentaires 10 empêchent le déplacement des poches ostréicoles P selon un plan horizontal, parallèle à la table 2.

De préférence, on pourra prévoir un nombre de picots supplémentaires 10 tel qu'au moins deux picots 8 et 10 soient disponibles pour chaque poche ostréicole P et soient disposés sur les barres longitudinales périphériques 5a et 5d, par exemple un picot supplémentaire 10 par barre longitudinale périphérique 5a et 5d, afin d'annuler ou tout du moins minimiser les risques de dégradation de l'intégrité des poches ostréicoles P.

Bien entendu, le support pourra comprendre un nombre de moyens de fixation du battant 6 au plateau 5 supérieur à deux. Le nombre de moyens de fixation du battant 6 pourra notamment être choisi en fonction de la longueur du battant 6, et disposé le long du plateau 5, à la suite les uns des autres.

Selon un mode de réalisation non illustré, il est également possible de ne prévoir qu'un seul battant 6. Dans ce cas, il pourra être fixé de manière pivotante sur l'une barre longitudinale périphérique 5a ou 5d du plateau 5 et les éléments de retenue 8 seront avantageusement disposés à l'opposé du plateau 5 sur l'autre des barres longitudinales périphériques 5a ou 5d.

Pour passer en position fermée, les battants 6 sont pivotés autour de l'axe de rotation formé par les barres longitudinales centrales 5b et 5c sur laquelle les moyens de fixation fixant les battants 6 de manière pivotante par rapport au plateau 5 sont montés, dans l'exemple illustré les crochets 9 en J, jusqu'à ce que la barre longitudinale 7 du battant 6 soit en regard des éléments de retenue 8. La barre longitudinale 7 est ensuite montée en force, dans l'exemple illustré par déformation, sur les éléments de retenue 8 de sorte que les éléments de retenue 8 maintiennent par contrainte en position fermée le battant 6, et notamment la barre longitudinale 7.

Lorsque l'on considère l'axe passant par l'une des barres longitudinales périphériques 5a ou 5d sur laquelle les deux moyens de retenue 8 sont disposés, on peut voir qu'en position fermée, la barre longitudinale 7 du battant 6 est montée sur les moyens de retenue de sorte que la portion centrale 7a de la barre longitudinale 7 du battant 6 s'étend d'un côté dudit axe et les extrémités libres 7b et 7c de la barre longitudinale 7 du battant 6 s'étendent de l'autre côté de l'axe.

Lorsque les battants 6 sont en position fermée, les poches ostréicoles P sont bloquées en position entre les battants 6 et le plateau 5, comme cela est illustré sur la figure 1, sans qu'il soit nécessaire d'ajouter un loquet ou autre dispositif de verrouillage équivalent.

Pour le passage des battants 6 en position ouverte, les barres longitudinales 7 sont libérées des moyens de retenue 8, retrouvant dans l'exemple illustré leur état initial non déformé, et peuvent être pivotées afin d'être dégagées des poches ostréicoles P.

L'invention fournit ainsi un support de poches à huîtres facile et rapide à utiliser, assurant un verrouillage non intrusif des poches à huîtres sur le plateau 5 de manière à maintenir l'intégrité des poches ostréicoles et des huîtres.

Le support 1 permet de bloquer de façon robuste et résistante dans le temps d'une ou plusieurs poches ostréicoles P placées sur le plateau 5 lorsque le battant est en position fermée. De par sa rigidité, il assure un parfait maintien des poches à huîtres. Au moins un battant peut être facilement et rapidement amené d'un même geste de sa position ouverte à sa position fermée. L'actionnement du ou des battant(s) permet de libérer ou de maintenir en position toutes les poches disposées sur la table du support à la fois.

L'utilisation de moyens de maintien réversible permet de les réutiliser et ainsi de réduire les coûts et de simplifier la manipulation des supports, notamment lors du retournement des poches ostréicoles.

L'utilisation de barres, de préférence métalliques, pour le plateau et le ou les battant(s) permet de réduire au minimum les surfaces au contact des poches et ainsi d'optimiser l'échange entre le milieu marin et les huîtres tout en conservant un maintien sécurisé des poches de par la rigidité des barres.

Un autre avantage du support 1 réside dans l'espace formé, en position fermée, entre la barre longitudinale 7 du battant 6 et les barres longitudinales 5 de la table 2 qui est tel qu'il permet de ne pas écraser la poche ostréicole P et laissant donc l'espace nécessaire pour les huîtres contenues dans la poche ostréicole.

## Revendications

1. Support (1) d'une ou plusieurs poches ostréicoles (P) pour l'élevage d'huîtres, comprenant un plateau (5) et des moyens de maintien desdites poches ostréicoles (P) sur le plateau (5), les moyens de maintien comprenant au moins un battant fixé de manière pivotante par rapport au plateau (5) entre une position ouverte permettant la mise en place des poches ostréicoles (P) sur le plateau (5) et une position fermée dans laquelle le battant (6) est en regard du plateau (5) de manière à maintenir les poches ostréicoles (P) en position entre le plateau (5) et le battant (6), l'extrémité libre du battant (6) comportant une barre longitudinale (7) dimensionnée de façon à s'étendre sur les poches ostréicoles (P) dans la position fermée, ledit support (1) étant **caractérisé en ce qu'**il comprend des éléments de retenue (8) du battant (6) aptes à appliquer une force de retenue sur la barre longitudinale (7) pour fixer le battant (6) dans la position fermée.

2. Support selon la revendication 1, **caractérisé en ce que** la barre longitudinale (7) est apte à être déformée pour son montage en force dans la position fermée dans laquelle la barre longitudinale (7) est retenue par contrainte par les éléments de retenue (8).

3. Support selon l'une quelconque des revendications précédentes, **caractérisé en ce que** les éléments de retenue (8) sont disposés sur au moins une extrémité libre du plateau (5).

4. Support selon l'une quelconque des revendications précédentes, **caractérisé en ce qu'**un ou plusieurs des éléments de retenue (8) sont des picots (8) s'étendant depuis le plateau (5) dans un plan perpendiculaire au plan passant par le plateau (5).

5. Support selon la revendication 4, **caractérisé en ce que** les battants (6) et les éléments de retenue (8) sont configurés de sorte que dans la position fermée du battant (6), la barre longitudinale (7) est retenue par contrainte par deux picots (8).

6. Support selon l'une quelconque des revendications précédentes, **caractérisé en ce qu'**il comprend deux battants (6).

7. Support selon la revendication 6, **caractérisé en ce que** les deux battants (6) sont disposés sur le plateau (5) de manière à pivoter en sens opposés.

8. Support selon l'une quelconque des revendications précédentes, **caractérisé en ce qu'**il comprend des moyens amovibles de fixation (9) du battant (6) au plateau (5).

9. Support selon la revendication 8, **caractérisé en ce que** les moyens amovibles de fixation (9) comprennent au moins deux crochets (9) de pivotement en forme de J ou de U solidaires du battant (6) à une extrémité (94) des crochets (9).

## Patentansprüche

1. Halterung (1) für ein oder mehrere Austernnetze (P) für die Austernzucht, umfassend eine Platte (5) und Haltemittel der Austernnetze (P) auf der Platte (5), wobei die Haltemittel mindestens einen Flügel umfassen, der in Bezug auf die Platte (5) zwischen einer geöffneten Position, die das Platzieren der Austernnetze (P) auf der Platte (5) gestattet, und einer geschlossenen Position, in welcher der Flügel (6) der Platte (5) derart zugewandt ist, dass die Austernnetze (P) zwischen der Platte (5) und dem Flügel (6) in Position gehalten werden, schwenkend befestigt ist, wobei das freie Ende des Flügels (6) eine längliche Stange (7) aufweist, der derart bemessen ist, dass sie sich in der geschlossenen Position über den Austernnetzen (P) erstreckt, wobei die Halterung (1) **dadurch gekennzeichnet ist, dass** sie Halteelemente (8) des Flügels (6) umfasst, die imstande sind, eine Haltekraft auf die längliche Stange (7) auszuüben, um den Flügel (6) in der geschlossenen Position zu befestigen.

2. . Halterung nach Anspruch 1, **dadurch gekennzeichnet, dass** die längliche Stange (7) imstande ist, für ihre kraftschlüssige Montage in der geschlossenen Position verformt zu werden, in der die längliche Stange (7) von den Halteelementen (8) durch Spannung gehalten wird.

3. . Halterung nach einem der vorangehenden Ansprüche, **dadurch gekennzeichnet, dass** die Halteelemente (8) auf mindestens einem freien Ende der Platte (5) angeordnet sind.

4. . Halterung nach einem der vorangehenden Ansprüche, **dadurch gekennzeichnet, dass** eins oder mehrere der Halteelemente (8) Zacken (8) sind, die sich ab der Platte (5) in einer senkrechten Ebene zur der durch die Platte (5) verlaufenden Ebene erstrecken.

5. . Halterung nach Anspruch 4, **dadurch gekennzeichnet, dass** die Flügel (6) und die Halteelemente (8) derart ausgelegt sind, dass die längliche Stange (7) in der geschlossenen Position des Flügels (6) von zwei Zacken (8) durch Spannung gehalten wird.

6. . Halterung nach einem der vorangehenden Ansprüche, **dadurch gekennzeichnet, dass** sie zwei Flügel (6) umfasst.

7. . Halterung nach Anspruch 6, **dadurch gekennzeichnet, dass** die zwei Flügel (6) auf der Platte (5) derart angeordnet sind, dass sie in entgegengesetzter Richtung schwenken.

8. . Halterung nach einem der vorangehenden Ansprüche, **dadurch gekennzeichnet, dass** sie lösbare Befestigungsmittel (9) des Flügels (6) an der Platte (5) umfasst.

9. . Halterung nach Anspruch 8, **dadurch gekennzeichnet, dass** die lösbaren Befestigungsmittel (9) mindestens zwei J- oder U-förmige Schwenkhaken (9) umfassen, die mit dem Flügel (6) an einem Ende (94) der Haken (9) fest verbunden sind.

## Claims

1. A support (1) for one or more oyster bags (P) for oyster farming, comprising a plate (5) and means for holding said oyster bags (P) on the plate (5), the holding means comprising at least one flap fixed in a pivoting manner with respect to the plate (5) between an open position allowing the placement of the oyster bags (P) on the plate (5) and a closed position wherein the flap (6) is opposite the plate (5) so as to maintain the oyster bags (P) in position between the plate (5) and the flap (6), the free end of the flap (6) including a longitudinal bar (7) dimensioned so as to extend over the oyster bags (P) in the closed position, said support (1) being **characterised in that** it comprises elements (8) for retaining the flap (6) capable of applying a retaining force on the longitudinal bar (7) to fix the flap (6) in the closed position.

2. The support according to claim 1, **characterised in that** the longitudinal bar (7) is adapted to be deformed in order to be force-fitted in the closed position wherein the longitudinal bar (7) is forcefully retained by the retaining elements (8).

3. The support according to any one of the preceding claims, **characterised in that** the retaining elements (8) are disposed on at least one free end of the plate (5).

4. The support according to any one of the preceding claims, **characterised in that** one or more of the retaining elements (8) are pins (8) extending from the plate (5) in a plane perpendicular to the plane passing through the plate (5).

5. The support according to claim 4, **characterised in that** the flaps (6) and the retaining elements (8) are configured so that in the closed position of the flap (6), the longitudinal bar (7) is forcefully retained by two pins (8) .

6. The support according to any one of the preceding claims, **characterised in that** it comprises two flaps (6).

7. The support according to claim 6, **characterised in that** the two flaps (6) are disposed on the plate (5) so as to pivot in opposite directions.

8. The support according to any one of the preceding claims, **characterised in that** it comprises removable means (9) for fixing the flap (6) to the plate (5).

9. The support according to claim 8, **characterised in that** the removable fixing means (9) comprise at least two J or U-shaped pivoting hooks (9) integral with the flap (6) at one end (94) of the hooks (9).
